# DEMANDE DE BREVET EUROPEEN

(11) **EP 1 048 997 A1**
(43) Date de publication de la demande: **02.11.2000**
(21) Numéro de dépôt: 00401015.3
(22) Date de dépôt: 12.04.2000
(51) Int. Cl.: G05D 23/13

(54) **Cartouche de robinet mitigeur à limitation de température**

(30) Priorité: 28.04.1999 FR 9905389
(71) Demandeur: VERNET S.A., 91291 Arpajon Cédex (FR)
(72) Inventeur: Chamot, Jean, 91290 Arpajon (FR); Mace, Christian, 91810 Vert le Grand (FR)
(74) Mandataire: Farges, Roger

(57) **Abrégé**

L'invention concerne une cartouche à flux renversé comportant un corps (1) où aboutissent un conduit (F) d'arrivée de fluide froid, un conduit (C) d'arrivée de fluide chaud, et un conduit (M) d'évacuation de fluide mitigé.

Selon l'invention, un bipasse (B) relie les conduits d'arrivée de fluide froid et d'évacuation de fluide mitigé, et la cartouche est équipée d'un dispositif (7, 8) d'obturation du bipasse comportant un élément thermostatique (7) muni d'un obturateur (74) pour obturer le bipasse tant que la température du fluide évacué reste inférieure ou égale à une température prédéterminé, et dégager le bipasse quand elle devient supérieure à cette température afin de provoquer alors un écoulement de fluide du conduit (F) d'arrivée de fluide froid au conduit (M) d'évacuation à travers le bipasse (B).

L'invention peut être utilisée notamment dans les installations de distribution d'eau.

## Description

L'invention concerne les robinets mitigeurs et plus particulièrement les cartouches de robinet mitigeur dites à flux renversé.

Les robinets mitigeurs sont des robinets comportant une cartouche comprenant un corps dans lequel s'étendent et aboutissent un premier conduit d'arrivée de fluide pour amener dans le corps un fluide à une première température, un deuxième conduit d'arrivée de fluide pour amener dans le corps un fluide à une deuxième température supérieure à la première, et un conduit d'évacuation de fluide pour évacuer du corps un fluide, dit « mitigé », à une température désirée dans la gamme allant de la première à la deuxième température, résultant d'un mélange en proportions variables des deux courants issus respectivement des deux conduits d'arrivée de fluide.

En vue de choisir à la fois la température et le débit du fluide mitigé, la cartouche comporte un unique organe de manoeuvre généralement constitué par un levier plus ou moins incliné par rapport à l'axe central longitudinal de la cartouche, destiné à être manoeuvré par l'utilisateur du robinet ; généralement, une rotation du levier autour de cet axe modifie la température du fluide mitigé, et un basculement du levier en restant dans un même plan vertical modifie le débit de fluide ; une composition des deux mouvements permet de modifier à la fois la température et le débit; également généralement, la proportion du mélange peut varier pratiquement de 100%-0% à 0%-100%, ce qui entraîne que la température du fluide peut varier du « plein froid » au « plein chaud ».

Ces robinets étant couramment utilisés dans les installations de distribution d'eau domestique, dans lesquelles les appareils de production d'eau chaude délivrent de l'eau dont la température peut atteindre 80°C environ, les risques de brûlures relativement graves sont réels.

En vue de remédier à cet inconvénient, il est possible de prévoir une butée pour bloquer la rotation du levier avant l'obturation complète du conduit d'arrivée d'eau froide, ce qui permet de limiter la température de l'eau mitigée du côté « haut ». Cependant, la température atteinte en butée dépend du rapport des pressions d'alimentation en eau froide et en eau chaude ainsi que du débit; en particulier, dans certaines conditions (pression d'eau chaude supérieure à la pression d'eau froide) la température maximale peut pratiquement atteindre la température de l'eau chaude, et le risque de brûlure subsiste donc.

L'invention a donc pour but de remédier aux inconvénients des robinets mitigeurs connus et concerne à cette fin une cartouche de robinet mitigeur à flux renversé comportant un corps dans lequel aboutissent un premier conduit d'arrivée de fluide pour amener dans le corps un fluide à une première température, un deuxième conduit d'arrivée de fluide pour amener dans le corps un fluide à une deuxième température supérieure à la première température, et un conduit d'évacuation de fluide pour évacuer du corps un fluide à une température désirée dans la gamme allant de la première à la deuxième température, caractérisée en ce qu'elle comporte un bipasse reliant le premier conduit d'arrivée au conduit d'évacuation, et est équipée d'un dispositif d'obturation du bipasse comportant un élément thermostatique muni d'un obturateur adapté pour obturer le bipasse tant que la température du fluide évacué reste inférieure ou égale à une température prédéterminée de consigne, et pour dégager le bipasse lorsque la température du fluide évacué dépasse cette température, afin de provoquer alors un écoulement de fluide du premier conduit d'arrivée au conduit d'évacuation à travers le bipasse.

Grâce à l'élément thermostatique, c'est directement en fonction de la température du fluide parcourant le conduit d'évacuation, qu'est réglé l'écoulement de fluide d'appoint à une température basse destiné à sécuriser le fonctionnement du robinet, dans le bipasse.

La cartouche peut de plus présenter une ou plusieurs des caractéristiques suivantes :
- le premier conduit d'arrivée de fluide pour amener dans le corps un fluide à une première température et le conduit d'évacuation de fluide pour évacuer du corps un fluide à une température désirée s'étendent dans une première direction, et le bipasse s'étend dans une direction perpendiculaire à cette première direction ;
- l'élément thermostatique comporte une collerette, et cette collerette forme l'obturateur adapté pour obturer le bipasse tant que la température du fluide évacué reste inférieure ou égale à une température prédéterminée de consigne, et pour dégager le bipasse lorsque la température du fluide évacué dépasse cette température ;
- le dispositif d'obturation comporte une rondelle-clapet enfilée autour de l'élément thermostatique, et cette rondelle-clapet forme l'obturateur adapté pour obturer le bipasse tant que la température du fluide évacué reste inférieure ou égale à une température prédéterminée de consigne, et pour dégager le bipasse lorsque la température du fluide évacué dépasse cette température ;
- le dispositif d'obturation comporte un boisseau enfilé autour de l'élément thermostatique, et ce boisseau forme l'obturateur adapté pour obturer le bipasse tant que la température du fluide évacué reste inférieure ou égale à une température prédéterminée de consigne, et pour dégager le bipasse lorsque la température du fluide évacué dépasse cette température ;
- elle comporte un corps formant boîtier comprenant une jupe dans laquelle s'étendent et aboutissent le premier conduit d'arrivée, le deuxième conduit d'arrivée, et le conduit d'évacuation, ainsi que le bipasse reliant le premier conduit d'arrivée et le conduit d'évacuation, et qui est équipé du dispositif d'obturation du bipasse ;
- elle comprend une cartouche de robinet mitigeur conventionnelle sans bipasse ni dispositif d'obturation du bipasse, comportant un boîtier, et un adaptateur limiteur de température comportant un boîtier, le corps formant boîtier est constitué du boîtier de la cartouche conventionnelle et du boîtier de l'adaptateur constitué par une jupe traversée par le premier conduit d'arrivée, le deuxième conduit d'arrivée et le conduit d'évacuation, qui aboutissent dans le boîtier de la cartouche conventionnelle, et l'adaptateur comporte également le bipasse reliant le premier conduit d'arrivée et le conduit d'évacuation et est équipé du dispositif d'obturation du bipasse ;
- elle est du type à disques, par exemple à disques en céramique ;
- elle est du type à surfaces cylindriques, la cartouche étant du type à piston ;
- elle est du type à surfaces sphériques, la cartouche étant du type à boule.

D'autres caractéristiques et avantages de l'invention ressortiront de la description qui va suivre, de formes de réalisation de l'invention données à titre d'exemples non limitatifs et illustrées par les dessins joints dans lesquels :
- la figure 1 est une section longitudinale schématique d'une première forme de réalisation d'une cartouche de robinet mitigeur selon l'invention dont les composants sont représentés dans une position dans laquelle le fluide parcourant le conduit d'évacuation est à une température telle que l'obturateur obture le bipasse ;
- la figure 2 est une vue schématique de dessus de la cartouche correspondant à la figure 1,
- la figure 3 est une section longitudinale schématique de la cartouche de la figure 1 dont les composants sont représentés dans une position dans laquelle le fluide parcourant le conduit d'évacuation est à une température telle que l'obturateur dégage le bipasse,
- la figure 4 est une vue schématique de dessus de la cartouche correspondant à la figure 3,
- la figure 5 est une section longitudinale schématique d'une deuxième forme de réalisation d'une cartouche de robinet mitigeur selon l'invention dont les composants sont représentés dans une position dans laquelle le fluide parcourant le conduit d'évacuation est à une température telle que l'obturateur obture le bipasse,
- la figure 6 montre une variante de montage du dispositif d'obturation applicable aux formes de réalisation des figures 1 à 5, et
- la figure 7 montre une autre variante de montage du dispositif d'obturation, dans laquelle l'obturateur est un boisseau, au lieu d'un clapet comme sur la figure 6.

La cartouche de robinet mitigeur représentée schématiquement sur les dessins, destinée à équiper des robinets d'alimentation en eau notamment pour les installations domestiques, est du type à disques en céramique, mais l'invention est applicable à tous les types de cartouche à flux renversé.

Cette cartouche comporte un corps 1 formant boîtier comprenant une jupe 11 ici extérieurement de forme généralement cylindrique, et, à une extrémité de la jupe, un bouchon 12 fixé à elle par exemple en étant vissé dans celle-ci et présentant une ouverture centrale pour le passage d'un levier 2 destiné à être manoeuvré par l'utilisateur du robinet pour commander le débit et la température de l'eau délivrée par la cartouche, donc par le robinet.

Dans la jupe 11 du corps 1, s'étendent et aboutissent un premier conduit d'arrivée F adapté pour amener dans le corps ici de l'eau à une première température (dite « eau froide » dans la suite de la description), un deuxième conduit d'arrivée C adapté pour amener dans le corps ici de l'eau à une deuxième température supérieure à la première (dite « eau chaude » dans la suite de la description), et un conduit d'évacuation M pour évacuer du corps ici de l'eau à une température désirée dans la gamme allant de la première à la deuxième température (dite « eau mitigée » dans la suite de la description) ; ces trois conduits F, C, M, sont définis dans la jupe par des cloisons internes de celle-ci convenablement disposées, s'interrompant ici approximativement à mi-longueur de la jupe pour y définir un espace interne 110 où débouchent les trois conduits.

De préférence, les trois conduits F, C, M débouchent dans l'espace interne 110 de la jupe 11 dans un même plan perpendiculaire à l'axe central longitudinal de la jupe, et ici s'étendent dans la direction de cet axe, ce plan étant matérialisé par les chants d'extrémité des cloisons définissant les conduits. Par exemple, le conduit d'évacuation M est centré sur et s'étend autour de l'axe central longitudinal de la jupe, et les conduits d'arrivée F et C s'étendent de part et d'autre de lui.

Une face ici plane d'un disque en céramique 3 maintenu fixe dans l'espacement interne 110 de la jupe, est accolée contre ces chants d'extrémité des cloisons ; ce disque en céramique, ici circulaire, est percé de trois trous traversants 3F, 3C, 3M prolongeant respectivement les conduits F, C, M ; le disque fixe 3 et les chants d'extrémité des cloisons sont appliqués en contact étanche au moyen de joints toriques logés dans des rainures creusées dans ces chants et s'étendant circonférentiellement l'une autour de l'orifice par lequel débouchent le conduit d'évacuation M et une autre concentriquement autour de l'ensemble des trois orifices respectifs des trois conduits.

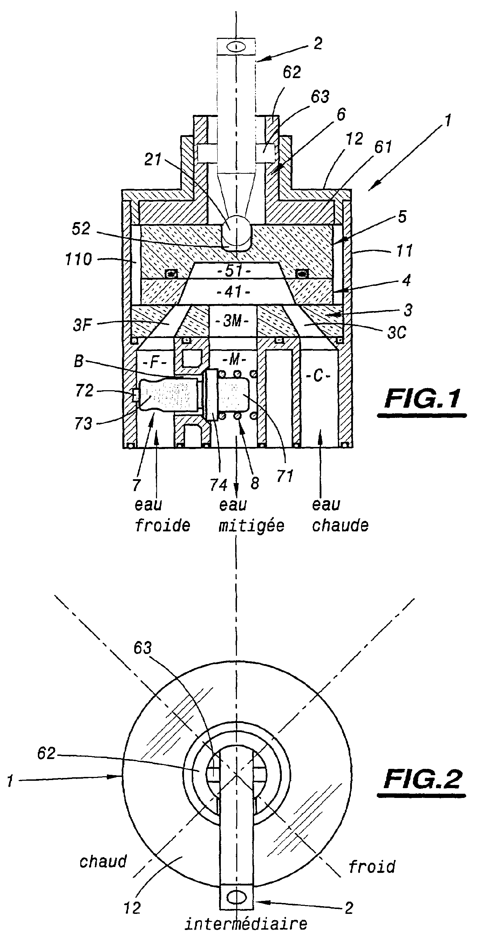

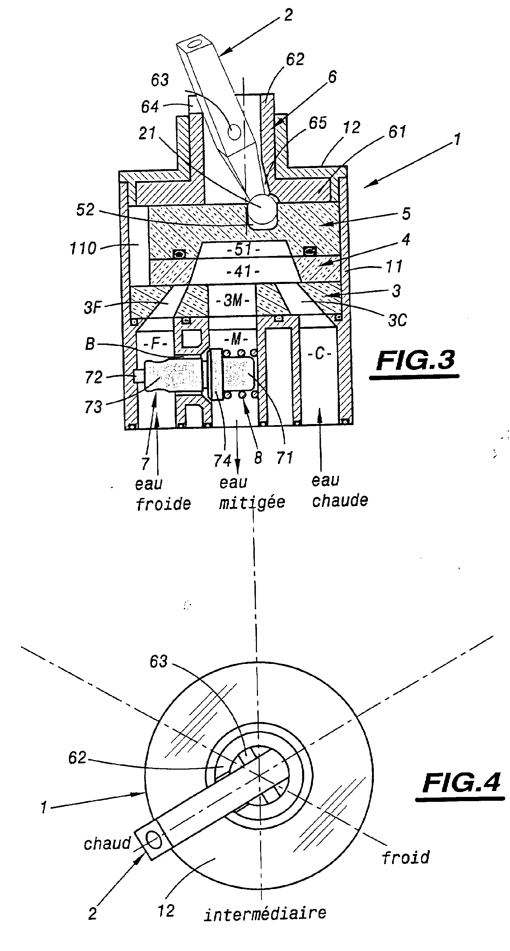

Les deux faces du disque fixe 3 sont parallèles, et la face opposée à celle qui est accolée aux chants d'extrémité des cloisons des conduits sert de portée de guidage de glissement à une face plane d'un disque en céramique 4 mobile qui lui est accolée, lequel disque mobile 4 est solidarisé au levier de manoeuvre 2, et sert d'obturateur sélectif pour les trous 3F, 3C du disque fixe. Pour pouvoir être mobile en restant accolé au disque fixe 3, le disque 4, ici circulaire, présente un diamètre inférieur à celui du disque 3, et est maintenu contre celui-ci par un dispositif qui sera décrit plus loin. Pour qu'il puisse sélectivement dégager les trous du disque fixe, sa face qui est accolée à celui-ci comporte un évidement 41 ici central pouvant être traversant et reliant, en les dégageant partiellement et de manière égale, les trous d'arrivée 3F, 3C en passant par le trou d'évacuation 3M lui-même dégagé totalement, quand le disque mobile 4 est centré sur l'axe central longitudinal de la jupe (figures 1 et 2) ; lorsque, à partir de cette position centrale, le disque mobile 4 est actionné, le long d'un diamètre du disque 3 équidistant des trous d'arrivée 3F, 3C, dans un premier sens, l'évidement 41 dégage de plus en plus (jusqu'au dégagement total) ces trous d'arrivée sans cesser de dégager entièrement le trou d'évacuation ; lorsqu'il est actionné en sens opposé, il obture de plus en plus (jusqu'à l'obturation totale) les trous d'arrivée également sans cesser de dégager entièrement le trou d'évacuation ; lorsque, à partir d'une position définie précédemment (par exemple celle des figures 1 et 2), le disque mobile 4 est actionné le long d'un arc de circonférence dans un premier sens, le trou 3F d'arrivée d'eau froide est de plus en plus obturé et le trou d'arrivée d'eau chaude 3C de plus en plus dégagé (figures 3 et 4), et lorsqu'il est actionné en sens opposé, le trou d'arrivée d'eau froide est de plus en plus dégagé et le trou d'arrivée d'eau chaude est de plus en plus obturé, toujours sans cesser de dégager entièrement le trou d'évacuation. Ainsi, par l'actionnement d'un unique organe de manoeuvre 2, on peut obtenir un mélange à débit et en proportions variables des deux courants issus respectivement des deux conduits d'arrivée F, C, un basculement du levier provoquant une translation rectiligne du disque mobile modifiant essentiellement le débit de l'eau évacuée, et une rotation du levier provoquant une rotation du disque mobile modifiant essentiellement la température de l'eau évacuée.

Le disque mobile 4 est solidarisé au levier de manoeuvre 2 par l'intermédiaire d'un disque d'actionnement 5 accolé et fixé contre la face du disque mobile 4 opposée à celle qui porte et glisse contre une face du disque fixe 3, et qui lui est parallèle. Si l'évidement 41 du disque mobile 4 est traversant, la face du disque d'actionnement 5 qui est accolée à celui-ci peut présenter elle-même un évidement 51 prolongeant celui du disque 4 ; dans le même cas, le disque mobile 4 et le disque d'actionnement 5 sont appliqués en contact étanche au moyen d'un joint torique logé dans une rainure creusée dans la même face du disque d'actionnement et s'étendant circonférentiellement autour de son évidement 51. Le disque d'actionnement 5 est lié au levier 2 par le fait que sa face opposée et parallèle à celle qui est accolée au disque mobile 4 présente une cavité 52, et le levier 2 présente, à son extrémité libre pénétrant dans le corps 1, un ergot 21 ici de forme approximativement sphérique, ajusté dans la cavité 52 pour former une liaison par rotule ; afin de ne pas entraver les déplacements du disque mobile, le contour du disque d'actionnement ne déborde pas du contour du disque mobile.

Le dispositif permettant que le disque mobile 4 soit maintenu contre le disque fixe 3 comporte une butée pivotante 6 constituée, en une seule pièce, d'un disque de butée 61 logé dans le volume défini par la jupe 11 du boîtier 1 et d'un canon 62 logé dans l'ouverture centrale du bouchon 12, cette butée 6 présentant un trou traversant s'étendant le long et autour de l'axe central longitudinal du boîtier, pour le passage du levier 2. Le disque de butée 61 présente une face plane accolée au disque d'actionnement 5 et servant de portée de guidage de glissement à celui-ci lorsqu'il est déplacé en translation et/ou en rotation par le levier 2. La butée 6 porte par ailleurs un arbre 63 s'étendant diamétralement dans son trou traversant, autour duquel est articulé le levier 2 ; de plus, l'extrémité libre du canon 62 présente une ou plusieurs échancrures 64 permettant d'incliner le levier 2 autant qu'il est nécessaire pour déplacer le disque d'actionnement 5 et le disque mobile en céramique 4 jusqu'à leurs positions extrêmes ; pour la même raison, le trou traversant de la butée pivotante 6 peut présenter un dégagement 65 de forme appropriée dans sa région proche de la cavité 52 du disque d'actionnement 5.

Grâce à cet agencement, une simple rotation du levier 2 autour de l'axe longitudinal de l'arbre 63 provoque une translation rectiligne du disque d'actionnement 5 et du disque mobile 4 et ainsi une modification du débit par la conduite d'évacuation, et une simple rotation du levier à inclinaison fixe entraînant une rotation de l'axe longitudinal de l'arbre 63 autour de l'axe central longitudinal de la cartouche provoque une simple rotation du disque d'actionnement et du disque mobile et ainsi une modification de la proportion du mélange, pouvant normalement varier de 100%-0% à 0%-100%.

Cependant, selon l'invention, la cartouche comprend en outre un bipasse B reliant le premier conduit F d'arrivée d'eau froide au conduit d'évacuation M d'eau mitigée, et est équipée d'un dispositif d'obturation du bipasse B comportant un élément thermostatique 7 muni d'un obturateur adapté pour obturer le bipasse tant que la température du fluide évacué reste inférieure ou égale à une température prédéterminée de consigne, et pour dégager le bipasse quand la température du fluide évacué dépasse cette température afin de provoquer alors un écoulement de fluide du premier conduit F au conduit d'évacuation M à travers le bipasse.

L'élément thermostatique 7 est un élément du type à cire dilatable, c'est-à-dire comportant une enceinte ou coupelle 71 dans laquelle est disposée une masse de cire dilatable et débouche une région d'extrémité d'un piston 72 mobile en translation longitudinale, dont la face d'extrémité est en appui contre la masse de cire ; le piston est guidé dans un cylindre entouré d'un soufflet de protection 73 en matériau élastomère appelé manchette entourant également le piston sur une partie de sa longueur sans atteindre son extrémité libre opposé à la coupelle ; la coupelle porte une collerette extérieure 74 dans la région proche du cylindre de guidage du piston, à l'opposé de son extrémité libre; cette collerette comporte, côté cylindre, une courte région d'extrémité à surface approximativement tronconique ou sphérique, pour être susceptible de servir de clapet.

Dans la forme de réalisation des figures 1 à 4, le bipasse consiste en un trou à section circulaire traversant la cloison séparant le premier conduit d'arrivée F et le conduit d'évacuation M. Ce trou est cylindrique sur la plus grande partie de sa longueur, avec un diamètre légèrement supérieur à celui de l'ensemble cylindre-soufflet de l'élément thermostatique, et présente une région tronconique ou sphérique débouchant en s'évasant dans le conduit d'évacuation M et s'étendant sur une gamme de diamètres comprenant les diamètres de la région d'extrémité approximativement tronconique ou sphérique de la collerette 74 de l'élément thermostatique 7. Ici, le bipasse cylindrique s'étend autour d'un axe longitudinal perpendiculaire à la direction dans laquelle s'étendent les conduits d'arrivée F d'eau froide et d'évacuation M d'eau mitigée. L'ensemble cylindre-soufflet de l'élément thermostatique est disposé dans le bipasse B de telle sorte que, pour la température prédéterminée de consigne, le piston 72 soit en appui contre la partie de la paroi du premier conduit F qui est en vis-à-vis du bipasse et que la région à surface approximativement tronconique ou sphérique de la collerette 74 formant alors clapet obturateur soit en appui contre la région tronconique du bipasse, formant siège, la partie thermosensible, à savoir la coupelle 71, de l'élément 7 étant en saillie dans le conduit d'évacuation M d'eau mitigée, à distance de la partie de la paroi de ce conduit qui est en vis-à-vis du bipasse ; un organe élastique 8 tel qu'un ressort héliocoïdal enfilé autour de la coupelle 71 est en appui d'un côté contre cette partie de paroi du conduit M et de l'autre contre la collerette 74, pour rappeler automatiquement celle-ci vers son siège lors des rétractions de l'élément thermostatique 7.

Ainsi, tant que la température du fluide évacué par le conduit d'évacuation M reste inférieure ou égale à la température prédéterminée de consigne, le bipasse est obturé par la collerette 74 formant obturateur, de l'élément thermostatique 7 du dispositif d'obturation, qui est appliquée contre son siège ; mais lorsque la température du fluide dépasse la température de consigne, le piston 72 étant lui-même en appui, l'obturateur décolle de son siège, et du fluide du premier conduit F s'écoule en appoint vers le conduit d'évacuation M à travers le bipasse autour de l'ensemble cylindre-soufflet et de la collerette, ce qui refroidit le fluide évacué de la cartouche donc du robinet ; l'élément thermostatique se stabilise alors à une position d'équilibre induisant une température légèrement supérieure (de quelques degrés) à la température prédéterminée de consigne.

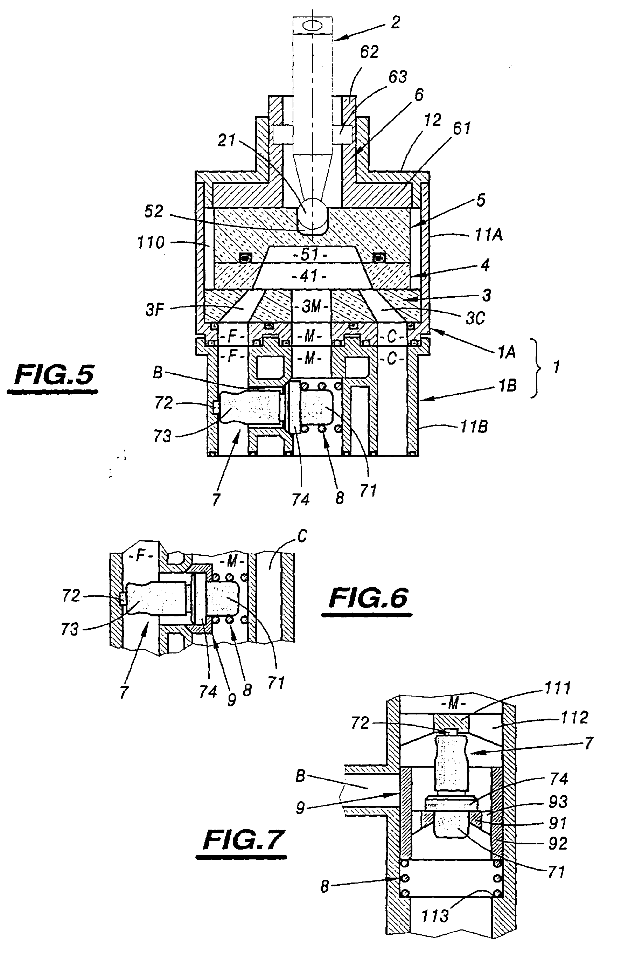

Dans la forme de réalisation de la figure 5, sur laquelle les éléments correspondant à des éléments visibles sur les figures 1 à 4 portent les mêmes repères numériques, la cartouche est en deux parties, à savoir une partie constituée par une cartouche conventionnelle sans bipasse ni élément thermostatique, et un adaptateur limiteur de température comportant le bipasse et l'élément thermostatique.

Dans cette forme de réalisation, le corps 1A formant boîtier de la cartouche conventionnelle est constitué par une jupe 11A et un bouchon 12, et le corps 1 B formant boîtier de l'adaptateur est constitué par une jupe 11 B dans laquelle la jupe 11A de la cartouche conventionnelle est emboîtée, pour former le corps 1 de la cartouche selon l'invention. La jupe 11 B est traversée de part en part par un premier conduit d'arrivée F adapté pour amener l'eau dite froide, un deuxième conduit d'arrivée C adapté pour amener l'eau dite chaude, et un conduit d'évacuation M pour évacuer l'eau dite mitigée. Lorsque l'adaptateur est fixé à la cartouche conventionnelle, les conduits F, C, M de l'adaptateur et les conduits F, C, M, de la cartouche conventionnelle sont respectivement dans le prolongement l'un de l'autre ; là encore, les conduits F, C, M, définis dans les jupes 11A, 11B par des cloisons internes de celle-ci convenablement disposées, s'étendent dans la direction de l'axe central longitudinal de la jupe, et débouchent à l'extrémité de chaque jupe dans un même plan perpendiculaire à cet axe, matérialisé par les chants des cloisons définissant les conduits.

L'étanchéité entre la cartouche conventionnelle et l'adaptateur est assurée par des joints toriques logés dans des rainures creusées dans les chants des cloisons de la jupe 11A de la cartouche conventionnelle qui sont en regard des chants des cloisons de la jupe 11B de l'adaptateur, et s'étendant circonférentiellement. Pour parfaire le centrage relatif des deux jupes, le chant de la cloison entourant le conduit d'évacuation M par exemple de la jupe 11A de la cartouche conventionnelle peut présenter une rainure supplémentaire s'étendant circonférentiellement, et le chant de la cloison entourant le conduit d'évacuation de la jupe 11B de l'adaptateur présenter une saillie circonférentielle adaptée pour s'emboîter dans cette rainure ; alors, l'étanchéité est assurée par un joint torique à proximité du conduit d'évacuation M (intérieur à la rainure supplémentaire), un joint torique extérieur à la rainure supplémentaire, et un joint torique entourant l'ensemble des trois conduits.

La partie de la cartouche conventionnelle représentée sur la figure 5 qui s'étend du disque fixe 3 aux extrémités libres de la butée pivotante 6 et du levier 2 étant identique à la partie correspondante de la cartouche représentée sur les figures 1 à 4, n'est pas à nouveau décrite. La structure interne de l'adaptateur est approximativement identique à celle de la partie de la cartouche selon l'invention représentée sur les figures 1 à 4 qui s'étend au dessous du disque fixe 3, et ainsi ne sera également pas décrite en détail ; on notera simplement que l'adaptateur transformant la cartouche conventionnelle en cartouche selon l'invention comporte un bipasse B reliant le premier conduit F d'arrivée d'eau froide et le conduit M d'évacuation d'eau mitigée, et est équipé d'un dispositif d'obturation du bipasse comportant un élément thermostatique 7 identique à celui déjà décrit, monté de la même façon et fonctionnant de manière identique.

La variante de la figure 6 correspond à un cas où il se révèle nécessaire que le bipasse B présente un diamètre notablement supérieur à celui de l'ensemble cylindre-soufflet de l'élément thermostatique 7 ; alors, le diamètre de la collerette 74 est généralement du même ordre que celui du bipasse ou même inférieur. Dans ce cas, le dispositif d'obturation n'utilise pas, en tant qu'obturateur, la collerette 74 de l'élément thermostatique, mais un obturateur séparé 9 constitué par une rondelle à cuvette enfilée autour de la coupelle 71, dont la cuvette sert de logement à la collerette 74, et dont la face en regard du bipasse présente un chanfrein tronconique ou sphérique adapté pour s'appliquer contre la région tronconique ou sphérique du bipasse B ; dans cette forme de réalisation, l'organe élastique 8 (ressort hélicoïdal) est en appui non pas contre la collerette 74, mais contre l'obturateur 9 constitué par la rondelle à cuvette.

Dans la variante de la figure 7, le dispositif d'obturation comprend également un élément thermostatique 7 à cire, mais l'obturateur 9 est du type boisseau. Le boisseau comporte deux bagues 91, 92 de forme générale cylindrique disposées concentriquement et reliées par une ou plusieurs nervures 93 s'étendant radialement ; la bague intérieure 91 est enfilée et ajustée autour de la coupelle 71 de l'élément thermostatique, en appui contre la collerette 74 de celui-ci, et la bague extérieure 92 est adaptée pour être ajustée de manière coulissante dans le conduit d'évacuation M au niveau du bipasse B.

L'élément thermostatique étant dans cette forme de réalisation entièrement logé dans le conduit d'évacuation M, celui-ci est muni intérieurement d'une butée centrale 111 placée quelques millimètres en amont du bipasse B et portée par une ou plusieurs nervures 112 s'étendant radialement dans le conduit, et d'un épaulement 113 placé quelques millimètres en aval du bipasse et tourné vers l'amont. Le piston 72 de l'élément thermostatique 7 est placé en appui contre la butée 111, l'emplacement de cette butée 111 ainsi que les dimensions de l'élément thermostatique et du boisseau étant choisies pour que, tant que la température prédéterminée de consigne n'est pas dépassée, la bague extérieure 92 du boisseau obture le bipasse.

Comme dans les formes de réalisation précédemment décrites, le dispositif d'obturation comporte également un organe élastique 8 constitué par un ressort hélicoïdal, sollicitant l'obturateur 9 vers la position de fermeture du bipasse, le ressort 8 étant enfilé dans le conduit d'évacuation M, une extrémité en appui contre l'épaulement 113 et l'extrémité opposée en appui contre la bague extérieure 92 du boisseau.

De même que précédemment, tant que la température de l'eau dans le conduit d'évacuation M ne dépasse pas la température prédéterminée de consigne, l'obturateur 9 ( et plus précisément ici la bague extérieure 92 du boisseau) obture le bipasse, et lorsque cette température est dépassée, l'obturateur dégage le bipasse, et un écoulement d'eau provenant du conduit d'arrivée d'eau froide refroidit l'eau évacuée, la température d'équilibre s'établissant quelques degrés au-dessus de la température prédéterminée de consigne ; lorsque la température dans le conduit d'évacuation M redescend, l'obturateur, sollicité par le ressort 8, revient progressivement en position d'obturation du bipasse.

Bien entendu, l'invention n'est pas limitée aux formes de réalisation de cartouche de mitigeur monocommande à flux renversé décrites et représentées, et on pourra en prévoir d'autres sans sortir de son cadre, et notamment des formes de réalisation dans lesquelles l'obturation partielle ou totale des conduits est réalisée non pas par un déplacement relatif de disques par exemple en céramique, mais par déplacement relatif de surfaces cylindriques, comme dans les mitigeurs à piston, ou de surfaces sphériques comme dans les mitigeurs à boule, ou autres.

## Revendications

1. Cartouche de robinet mitigeur à flux renversé comportant un corps (1 ; 1A, 1B) dans lequel aboutissent un premier conduit (F) d'arrivée de fluide pour amener dans le corps un fluide à une première température, un deuxième conduit (C) d'arrivée de fluide pour amener dans le corps un fluide à une deuxième température supérieure à la première température, et un conduit (M) d'évacuation de fluide pour évacuer du corps un fluide à une température désirée dans la gamme allant de la première à la deuxième température, caractérisée en ce qu'elle comporte un bipasse (B) reliant le premier conduit d'arrivée (F) au conduit d'évacuation (M), et est équipée d'un dispositif (7, 8 ; 7, 8, 9) d'obturation du bipasse comportant un élément thermostatique (7) muni d'un obturateur (74; 9) adapté pour obturer le bipasse (B) tant que la température du fluide évacué reste inférieure ou égale à une température prédéterminée de consigne, et pour dégager le bipasse lorsque la température du fluide évacué dépasse cette température, afin de provoquer alors un écoulement de fluide du premier conduit d'arrivée (F) au conduit d'évacuation (M) à travers le bipasse (B).

2. Cartouche de robinet mitigeur selon la revendication 1, caractérisée en ce que le premier conduit (F) d'arrivée de fluide pour amener dans le corps un fluide à une première température et le conduit (M) d'évacuation de fluide pour évacuer du corps un fluide à une température désirée s'étendent dans une première direction, et le bipasse (B) s'étend dans une direction perpendiculaire à cette première direction.

3. Cartouche de robinet mitigeur selon l'une quelconque des revendications 1 et 2, caractérisée en ce que l'élément thermostatique (7) comporte une collerette (74), et cette collerette forme l'obturateur adapté pour obturer le bipasse (B) tant que la température du fluide évacué reste inférieure ou égale à une température prédéterminée de consigne, et pour dégager le bipasse lorsque la température du fluide évacué dépasse cette température.

4. Cartouche de robinet mitigeur selon l'une quelconque des revendications 1 et 2, caractérisée en ce que le dispositif d'obturation comporte une rondelle-clapet enfilée autour de l'élément thermostatique (7), et cette rondelle-clapet forme l'obturateur (9) adapté pour obturer le bipasse (B) tant que la température du fluide évacué reste inférieure ou égale à une température prédéterminée de consigne, et pour dégager le bipasse lorsque la température du fluide évacué dépasse cette température.

5. Cartouche de robinet mitigeur selon l'une quelconque des revendications 1 et 2, caractérisée en ce que le dispositif d'obturation comporte un boisseau enfilé autour de l'élément thermostatique (7), et ce boisseau forme l'obturateur (9) adapté pour obturer le bipasse (B) tant que la température du fluide évacué reste inférieure ou égale à une température prédéterminée de consigne, et pour dégager le bipasse lorsque la température du fluide évacué dépasse cette température.

6. Cartouche de robinet mitigeur selon l'une quelconque des revendications 1 à 5, caractérisée en ce qu'elle comporte un corps (1) formant boîtier comprenant une jupe (11) dans laquelle s'étendent et aboutissent le premier conduit d'arrivée (F), le deuxième conduit d'arrivée (C), et le conduit d'évacuation (M), ainsi que le bipasse (B) reliant le premier conduit d'arrivée (F) et le conduit d'évacuation (M), et qui est équipé du dispositif (7, 8 ; 7, 8, 9) d'obturation du bipasse.

7. Cartouche de robinet mitigeur selon l'une quelconque des revendications 1 à 5, caractérisée en ce qu'elle comprend une cartouche de robinet mitigeur conventionnelle sans bipasse ni dispositif d'obturation du bipasse, comportant un boîtier (1A), et un adaptateur limiteur de température comportant un boîtier (1B), en ce que le corps (1) formant boîtier est constitué du boîtier (1A) de la cartouche conventionnelle et du boîtier (1 B) de l'adaptateur constitué par une jupe (11B) traversée par le premier conduit d'arrivée (F), le deuxième conduit d'arrivée (C) et le conduit d'évacuation (M), qui aboutissent dans le boîtier (1A) de la cartouche conventionnelle, et en ce que l'adaptateur comporte également le bipasse (B) reliant le premier conduit d'arrivée (F) et le conduit d'évacuation (M) et est équipé du dispositif (7, 8 ; 7, 8, 9) d'obturation du bipasse.

8. Cartouche de robinet mitigeur selon l'une quelconque des revendications 1 à 7, caractérisée en ce qu'elle est du type à disques, par exemple à disques en céramique.

9. Cartouche de robinet mitigeur selon l'une quelconque des revendications 1 à 7, caractérisée en ce qu'elle est du type à surfaces cylindriques, la cartouche étant du type à piston.

10. Cartouche de robinet mitigeur selon l'une quelconque des revendications 1 à 7, caractérisée en ce qu'elle est du type à surfaces sphériques, la cartouche étant du type à boule.
